# EUROPÄISCHE PATENTANMELDUNG

(11) **EP 4 706 836 A2**
(43) Veröffentlichungstag der Anmeldung: **11.03.2026**
(21) Anmeldenummer: 25196448.2
(22) Anmeldetag: 18.08.2025
(51) Int. Cl.: B08B 1/12, B08B 1/34, H02S 40/10

(54) **REINIGUNGSVORRICHTUNG ZUR REINIGUNG DER OBERFLÄCHE VON PHOTOVOLTAIK- UND SOLARANLAGEN ODER ANDERER GLATTER FLÄCHEN**

(30) Priorität: 05.09.2024 DE 202024105067 U
(71) Anmelder: Ehleuter, Franz, 87760 Lachen (DE)
(72) Erfinder: Ehleuter, Franz, 87760 Lachen (DE)
(74) Vertreter: Charrier Rapp & Liebau

(57) **Zusammenfassung**

Die Erfindung betrifft eine Reinigungsvorrichtung (1) zur Reinigung der Oberfläche von Solaranlagen, Photovoltaikanlagen, Glasdächern, Fassaden oder anderer glatter Flächen, die ein Reinigungsaggregat (2), eine Trag- und Positioniereinrichtung (3) mit einem mittels eines ersten Stellantriebs (11) um eine horizontale erste Querachse (10) schwenkbaren Auslegerarm (8) und einem an dem Auslegerarm (8) schwenkbar angeordneten Tragarm (15) zur Positionierung des Reinigungsaggregats (2) und eine an der Trag- und Positioniereinrichtung (3) angeordnete Lastausgleichseinrichtung (20, 21) zur Einstellung und automatischen Regulierung des von dem Reinigungsaggregat (2) auf die zu reinigende Oberfläche wirkenden Anpressdrucks enthält. Erfindungsgemäß ist der Tragarm (15) durch einen zweiten Stellantrieb (17) um eine zur ersten Querachse (10) parallele zweite Querachse (16) zwischen einer auf den Auslegerarm (8) zurückgeklappten Parkposition oberhalb des Auslegerarms (8) und einer ausgeklappten Reinigungsposition schwenkbar ist.

## Beschreibung

Die Erfindung betrifft eine Reinigungsvorrichtung zur Reinigung der Oberfläche von Solaranlagen, Photovoltaikanlagen, Glasdächern, Fassaden oder anderer glatter Flächen nach dem Oberbegriff des Anspruchs 1.

Eine derartige Reinigungsvorrichtung ist aus der DE 20 2011 105 493 U1 bekannt. Diese weist eine Reinigungseinheit mit einer an einem Träger drehbar gelagerten und durch einen Antrieb um ihre Längsachse drehbaren Reinigungsbürste und eine Trag- und Positioniereinrichtung mit einem um eine horizontale erste Querachse schwenkbaren Auslegerarm und einem an dem Auslegerarm schwenkbar angeordneten Tragarm zur Positionierung und Halterung des Reinigungsaggregats auf. Der Tragarm ist um eine zur horizontalen ersten Querachse rechtwinklige zweite Querachse schwenkbar, so dass der Tragarm zur Seite in eine Transport- oder Parkposition verschwenkt werden kann. Die Trag- und Positioniereinrichtung kann über ein als Dreipunktaufhängung ausgeführtes Traggestell an einem üblicherweise mit einer Dreipunkt-Anschlusskupplung versehenen Traktor oder einem anderen geeigneten Fahrzeug angekoppelt werden. Bei einer derartigen Ausführung der Trag- und Positioniereinrichtung sind jedoch die Verstellmöglichkeiten für die Verstellung des Reinigungsaggregats beschränkt. In der ausgeklappten Reinigungsstellung des Tragarms ist das Reinigungsaggregat nämlich relativ weit von dem Auslegerarm entfernt, wodurch zwischen dem Transportfahrzeug und dem Reinigungsaggregat ein entsprechend großer Abstand besteht. Dies kann besonders bei engen Abständen zwischen den Reihen der zu reinigenden Photovoltaik- und Solarpaneele zu Problemen mit der Zugänglichkeit führen.

Aufgabe der Erfindung ist es, eine Reinigungsvorrichtung zur effektiven Reinigung der Oberfläche von Solaranlagen, Photovoltaikanlagen, Glasdächern, Fassaden oder anderer glatter Flächen mit erweiterten Einsatzmöglichkeiten zu schaffen.

Diese Aufgabe wird durch eine Reinigungsvorrichtung mit den Merkmalen des Anspruchs 1 gelöst. Zweckmäßige Ausgestaltungen und vorteilhafte Weiterbildungen der Erfindung sind in den Unteransprüchen angegeben.

Die erfindungsgemäße Reinigungsvorrichtung enthält ein z.B. als Bürstenaggregat ausgebildetes Reinigungsaggregat, eine Trag- und Positioniereinrichtung mit einem um eine horizontale erste Querachse schwenkbaren Auslegerarm und einem an dem Auslegerarm schwenkbar angeordneten Tragarm zur Positionierung des Reinigungsaggregats sowie eine an der Trag- und Positioniereinrichtung angeordnete Lastausgleichseinrichtung zur Einstellung und automatischen Regulierung des von dem Reinigungsaggregat auf die zu reinigende Oberfläche wirkenden Anpressdrucks. Der Tragarm ist durch einen Stellantrieb um eine zur ersten Querachse parallele zweite Querachse zwischen einer auf den Auslegerarm zurückgeklappten Parkposition oberhalb des Auslegerarms und einer ausgeklappten Reinigungsposition schwenkbar. Durch die vorstehend beschriebene Trag- und Positioniereinrichtung kann das Reinigungsaggregat mit einem erweiterten Verstellbereich zwischen einer von einem Fahrantrieb weiter entfernten Reinigungsstellung und einer dicht am Fahrantrieb angeordneten Reinigungsstellung bewegt werden. Die Reinigungsvorrichtung kann somit auch auf engen Fahrwegen zwischen den Reihen der zu reinigenden Photovoltaik- und Solarpaneele verfahren werden und das Reinigungsaggregat kann über der gesamten Fläche der Photovoltaik- und Solarpaneele zur Reinigung in einem Durchgang platziert werden. Außerdem kann das Reinigungsaggregat in eine zurückgeklappte Raststellung gebracht werden, wodurch sich eine kompakte und platzsparende Bauweise ergibt.

In einer zweckmäßigen Ausführung ist der zweite Stellantrieb als Drehantrieb mit einem Getriebe und einem Antriebsmotor ausgebildet ist. Dadurch kann der Tragarm auf stabile Weise und mit einem großen Verstellbereich bewegt werden.

In einer weiteren vorteilhaften Ausgestaltung weist die Trag- und Positioniereinrichtung eine integrierte Energieversorgung zur Versorgung des Drehantriebs, des ersten Stellantriebs und des zweiten Stellantriebs mit Antriebsenergie auf. Dadurch kann die Reinigungsvorrichtung zusammen mit der Energieversorgungseinrichtung, der Trag- und Positioniereinrichtung und dem daran angeordneten Reinigungsaggregat autark eingesetzt und z.B. ohne zusätzliche Anschlüsse oder besondere Vorkehrungen einfach auf die Ladefläche eines Pickups oder eines anderen Transportfahrzeugs aufgesetzt werden. Das Fahrzeug muss keine speziellen Anforderungen aufweisen. Die Reinigungsvorrichtung ist dadurch flexibel und kostengünstig einsetzbar.

Der Drehantrieb und die Stellantriebe können als hydraulische Antriebe ausgeführt sein. Die Energieversorgungseinrichtung kann dann zweckmäßigerweise einen Verbrennungsmotor und eine Hydraulikpumpe zur Versorgung des Drehantriebs und der Stellantriebe mit Druckfluid umfassen. Der Drehantrieb und die Stellantriebe können aber auch als elektrische Antriebe ausgeführt sein. Dann kann die Energieversorgungseinrichtung als Batterie bzw. Akkumulator ausgeführt sein.

In weiterer vorteilhafter Weise enthält die Trag- und Positioniereinrichtung eine Tragkonstruktion, in der ein Reinigungsflüssigkeitsbehälter untergebracht ist. Dadurch ist auch der Behälter für die Reinigungsflüssigkeit in die Trag- und Positioniereinrichtung integriert. Der Reinigungsflüssigkeitsbehälter kann als Wassertank ausgebildet sein.

In einer weiteren vorteilhaften Ausführung kann die Trag- und Positioniereinrichtung einen integrierten Fahrantrieb enthalten. Dadurch kann die Reinigungsvorrichtung gelenkt oder ferngesteuert verfahren werden. Der Fahrantrieb kann als Kettenantrieb mit Fahrketten und einem hydraulischen oder elektrischen Antriebsmotor ausgebildet sein. Der Fahrantrieb kann aber auch als Radantrieb oder dgl. ausgeführt sein.

Bei dem als Kettenantrieb mit Fahrketten ausgebildeten Fahrantrieb kann der Abstand zwischen den Fahrketten durch einen Stellantrieb veränderbar sein. Im zusammengefahrenen Zustand des Fahrantriebs kann die Reinigungsvorrichtung so auch in schmalen Gassen zwischen den Reihen der zu reinigenden Photovoltaik- und Solarpaneele verfahren werden. Im auseinandergefahrenen Zustand bietet der Fahrantrieb eine stabile und kippsichere Auflage. Die Fahrketten können so auch bei schmaleren Gassen unter die Tragkonstruktionen der zu reinigenden Photovoltaik- und Solarpaneele verschoben und zur Reinigung unter diesen bewegt werden.

Der Stellantrieb zur Veränderung des Abstand zwischen den Fahrketten kann durch Stellzylinder sowie vordere und hintere horizontale Schwingen gebildet sein. Die zueinander parallelen vorderen und hinteren horizontalen Schwingen können über ein inneres Gelenk an einem zentralen Träger und ein äußeres Gelenk an dem Fahrkettenträger angelenkt sein.

Das Reinigungsaggregat kann in einer bevorzugten Ausführung als Bürstenaggregat mit einem am vorderen freien Ende des Tragarms angeordneten Zentralantrieb und zwei gegenüber dem Zentralantrieb zu beiden vorstehenden und durch den Zentralantrieb gleichzeitig angetriebenen Reinigungsbürsten ausgeführt.

Die Lastausgleichseinrichtung weist in einer einfachen Ausführung einen zwischen der Tragsäule und dem Auslegerarm angeordneten Niveauausgleichszylinder und einen dem Niveauausgleichszylinder zugeordneten Druckspeicher auf. Der Druckspeicher ist als Druckbehälter ausgeführt, der teilweise mit Hydraulikflüssigkeit und teilweise mit Luft oder einem anderen gasförmigen Medium beaufschlagt wird. Mittels einer Handpumpe kann der Auflagedruck eingestellt werden. Durch die Verbindung des Druckspeichers mit dem Niveauzylinder kann ein Lastausgleich erfolgen und eine Niveauregulierung durchgeführt werden. Der Lastausgleich kann aber auch durch entsprechende hydraulische Ansteuerung eines einzelnen Stellzylinders erfolgen. So kann z.B. der Steuerdruck während des Reinigungsvorgangs durch einen Drucksensor überwacht und geregelt werden. Wenn das Fahrzeug z.B. über Bodenunebenheiten fährt und sich dadurch der Steuerdruck verändert, kann eine Nachregelung erfolgen, so dass der vom Reinigungsaggregat auf die zu reinigende Fläche ausgeübte Auflage- oder Anpressdruck konstant gehalten werden kann.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Reinigungsvorrichtung in einer Parkposition;
- **Figur 2**: die Reinigungsvorrichtung von Figur 1 in einer Reinigungsposition;
- **Figur 3**: die Reinigungsvorrichtung von Figur 1 mit einer Positioniereinrichtung in einer ersten Stellung;
- **Figur 4**: die Reinigungsvorrichtung von Figur 1 mit einer Positioniereinrichtung in einer zweiten Stellung;
- **Figur 5**: eine Draufsicht auf einen Fahrantrieb einer Reinigungsvorrichtung in einem zusammengefahrenen Zustand und
- **Figur 6**: eine Draufsicht der Fahrantriebs von Figur 5 in einem auseinandergefahrenen Zustand.

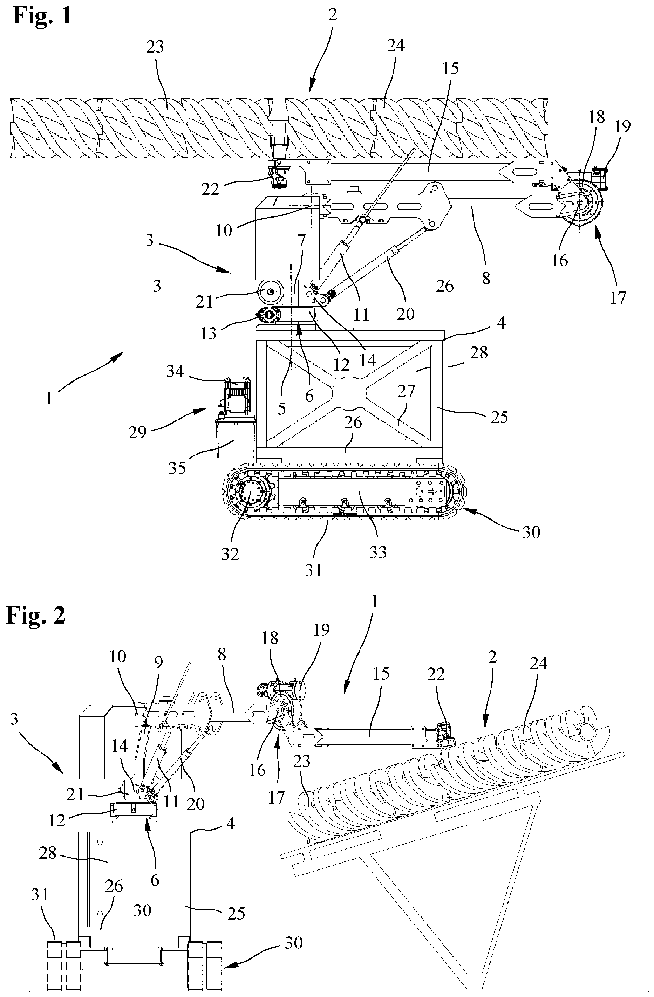

In den Figuren 1 und 2 ist eine Reinigungsvorrichtung 1 zur Reinigung der Oberfläche von Solaranlagen, Photovoltaikanlagen, Glasdächern, Fassaden oder anderer glatter Flächen in einer Parkposition und einer Reinigungsposition gezeigt. Die hier als autarke Einheit ausgebildete Reinigungsvorrichtung 1 weist ein über der zu reinigenden Oberfläche positionierbares und hier als motorisch angetriebene Reinigungsbürste ausgebildetes Reinigungsaggregat 2 und eine Trag- und Positioniereinrichtung 3 zur Halterung und Positionierung des Reinigungsaggregats 2 auf.

Die Trag- und Positioniereinrichtung 3 enthält ein Tragkonstruktion 4 und eine auf der Tragkonstruktion 4 um eine Vertikalachse 5 drehbar angeordnete und mittels eines Drehantriebs 6 drehbare Tragsäule 7, an deren oberen Ende ein Auslegerarm 8 über ein in Figur 2 erkennbares oberes Anschlussteil 9 um eine erste Querachse 10 schwenkbar angelenkt und mittels eines ersten Stellantriebs 11 verstellbar ist. Der Drehantrieb 6 ist bei der gezeigten Ausführung als hydraulischer Drehantrieb mit einem Getriebe 12 und einem ersten hydraulischen Stellmotor 13 ausgeführt. Der zur Einstellung der Neigung des Auslegerarms 8 dienende erste Stellantrieb 11 ist bei der gezeigten Ausführung als hydraulischer Stellzylinder ausgebildet, der zwischen einem unteren Anschlussteil 14 am unteren Ende der Tragsäule 7 und dem Auslegerarm 8 angeordnet ist den Auslegerarm 8 gegenüber der Tragsäule 7 abstützt.

Die Trag- und Positioniereinrichtung 3 enthält außerdem einen Tragarm 15, der am vorderen Ende des Auslegerarms 8 um eine zur ersten Querachse 10 parallele zweite Querachse 16 schwenkbar angelenkt und durch einen zweiten Stellantrieb 17 zwischen einer in Figur 1 gezeigten zurückgeklappten Raststellung oberhalb des Auslegerarms 8 und einer in Figur 2 gezeigten ausgeklappten Reinigungsstellung verschwenkbar ist. Der zweite Stellantrieb 17 zum Verschwenken des Tragarms 15 ist bei der gezeigten Ausführung als hydraulischer Drehantrieb mit einem Getriebe 18 und einem zweiten hydraulischen Stellmotor 19 ausgeführt. Durch geeignete Ansteuerung des Drehantriebs 6 und der beiden Stellantriebe 11 und 17 kann das am vordere Ende des Tragarms 15 angeordnete Reinigungsaggregat 2 zur Seite verschwenkt und zwischen einer in Figur 1 gezeigten Parkposition oberhalb des Auslegerarms 8 und einer ausgeklappten Reinigungsstellung mit einer geeigneten Neigung des Reinigungsaggregats 2 bewegt werden.

In Figur 1 ist erkennbar, dass zwischen dem unteren Anschlussteil 14 am unteren Ende der Tragsäule 7 und dem Auslegerarm 8 außerdem ein hydraulisch betätigter Niveauausgleichszylinder 20 angeordnet ist. Der Niveauausgleichszylinder 20 bildet zusammen mit einem hier als Blasenspeicher ausgebildeten Druckspeicher 21 eine Lastausgleichseinrichtung zur Einstellung und automatischen Regulierung des von dem Reinigungsaggregat 2 auf die zu reinigende Oberfläche wirkenden Anpressdrucks. Der Druckspeicher 21 ist als Druckbehälter ausgebildet, der teilweise mit Hydraulikflüssigkeit und teilweise mit Luft oder einem anderen gasförmigen Medium beaufschlagt wird. Mittels einer hier nicht dargestellten Handpumpe kann der Druck im Druckspeicher eingestellt werden. Durch die Verbindung des Druckspeichers 21 mit dem Niveauausgleichszylinder 20 kann ein Lastausgleich erfolgen und eine Niveauregulierung durchgeführt werden.

Durch die Lastausgleichseinrichtung kann der von dem Reinigungsaggregat 2 auf die zu reinigende Oberfläche ausgeübte Druck nicht nur auf einen gewünschten Wert eingestellt, sondern auch beibehalten werden, wenn die Reinigungsvorrichtung 1 während ihrer Bewegung entlang der zu reinigenden Solarmodule über Bodenunebenheiten fährt. Der Auslegerarm 8 reguliert sich über die Lastausgleichseinrichtung automatisch nach, so dass ein Niveauausgleich erfolgen und der Auflagedruck oder Anpressdruck des Reinigungsaggregats 2 unabhängig von evtl. auftretenden Bodenunebenheiten konstant gehalten werden kann. Dadurch können Beschädigungen an den zu reinigenden Flächen vermieden werden.

Das Reinigungsaggregat 2 ist bei der gezeigten Ausführung als Bürstenaggregat mit einem am vorderen freien Ende des Tragarms 15 angeordneten Zentralantrieb 22 und zwei gegenüber dem Zentralantrieb 22 zu beiden vorstehenden und durch den Zentralantrieb 22 gleichzeitig angetriebenen Reinigungsbürsten 23 und 24 ausgeführt. Der Zentralantrieb 22 ist als Hydraulikantrieb mit einem Hydraulikmotor und einem Winkelgetriebe ausgeführt. Die beiden um ihre Längsachse drehbaren Reinigungsbürsten 23 und 24 können an voneinander getrennten Tragrohren oder an einem gemeinsamen Tragrohr angeordnet sein. An dem Tragrohr kann auch eine nicht im einzelnen dargestellte Sprüheinrichtung zum Aufbringen einer Reinigungsflüssigkeit angebracht sein.

Die Tragkonstruktion 4 enthält ein aus Vertikalstützen 25, Querträgern 26 und schrägen Verstrebungen 27 gebildetes Gestell, auf dem die Positioniereinrichtung 3 mit dem Tragrohr 7, dem Auslegerarm 8 und dem Tragarm 15 angeordnet ist. Innerhalb des Gestells ist ein Reinigungsflüssigkeitsbehälter 28 untergebracht. Die Tragkonstruktion 4 weist neben dem integriertem Reinigungsflüssigkeitsbehälter 28 eine integrierte Energieversorgungseinrichtung 29 für die Versorgung der diversen Antriebe der Reinigungsvorrichtung 1 auf.

In der gezeigten Ausführung enthält die Tragkonstruktion 4 außerdem einen Fahrantrieb 30, durch den die Reinigungsvorrichtung 1 entweder gelenkt oder ferngesteuert verfahren werden kann. Der Fahrantrieb 30 ist bei dem gezeigten Ausführungsbeispiel als Kettenantrieb mit Fahrketten 31 und hydraulischen oder elektrischen Antriebsmotoren 32 ausgebildet. Die Fahrketten 31 sind auf zwei zueinander parallelen Fahrkettenträgern 33 umlaufend geführt und können durch jeweils einen Antriebsmotor 32 angetrieben werden. Der Fahrantrieb 30 kann aber auch als Radantrieb ausgeführt sein. Die integrierte Energieversorgung 29 ist bei der gezeigten Ausführung als Hydraulik-Aggregat mit Verbrennungsmotor 34 und einer Hydraulikpumpe 35 für die Versorgung der hydraulischen Stellantriebe 5, 11 und 17 und des hydraulischen Antriebsmotor 32 mit Druckfluid ausgeführt. Die integrierte Energieversorgung 29 kann aber auch als Batterie ausgeführt sein, wenn die Stellantriebe und der Fahrantrieb als elektrische Antriebe ausgebildet sind. Außerdem kann die Tragkonstruktion 3 auch ohne Fahrantrieb 30 ausgeführt sein. Dann kann die Reinigungsvorrichtung 1 z.B. als autarke Einheit auf die Ladefläche eines Pickups oder dgl. aufgesetzt werden.

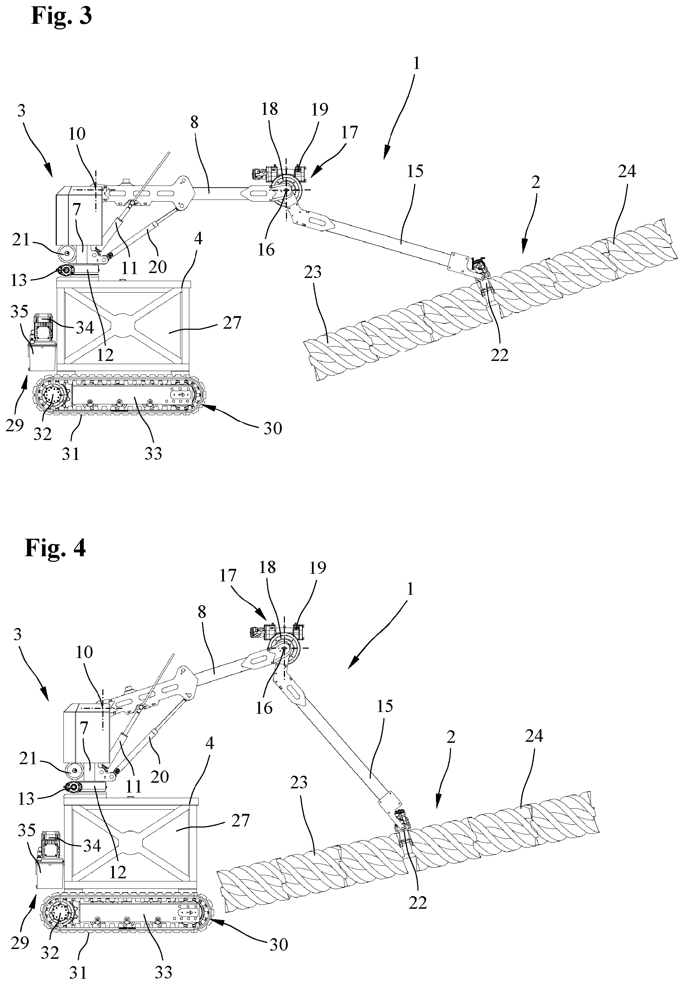

Wie aus den Figuren 3 und 4 hervorgeht, kann das Reinigungsaggregat 2 durch die vorstehend beschriebene Trag- und Positioniereinrichtung 3 zwischen einer von dem Fahrantrieb 30 weiter entfernten Reinigungsposition gemäß Figur 3 und einer dicht am Fahrantrieb 30 angeordneten Reinigungsposition gemäß Figur 4 bewegt werden. Bei einer gegenüber den Figuren 3 und 4 um 90° gedrehten Stellung der Tragkonstruktion 4 und des Fahrantriebs 30 kann die Reinigungsvorrichtung 1 somit auch auf engen Fahrwegen zwischen den Reihen der zu reinigenden Photovoltaik- und Solarpaneele verfahren und das Reinigungsaggregat 2 über der gesamten Fläche der Photovoltaik- und Solarpaneele zur Reinigung in einem Durchgang platzieren. Außerdem kann das Reinigungsaggregat 2 in eine zurückgeklappte Parkposition gebracht werden, wodurch sich eine kompakte und platzsparende Bauweise ergibt.

An der in Figur 4 gezeigten Tragkonstruktion 4 kann ein in der Zeichnung nicht dargestellter Sitz für eine Bedienperson angeordnet sein. Die Reinigungsvorrichtung 1 kann so von der Bedienperson zwischen den Solarpaneelreihen verfahren und bedient werden. Die Reinigungsvorrichtung kann aber auch über eine entsprechende Fernsteuerung ohne mitfahrender Bedienperson ferngesteuert bedient werden.

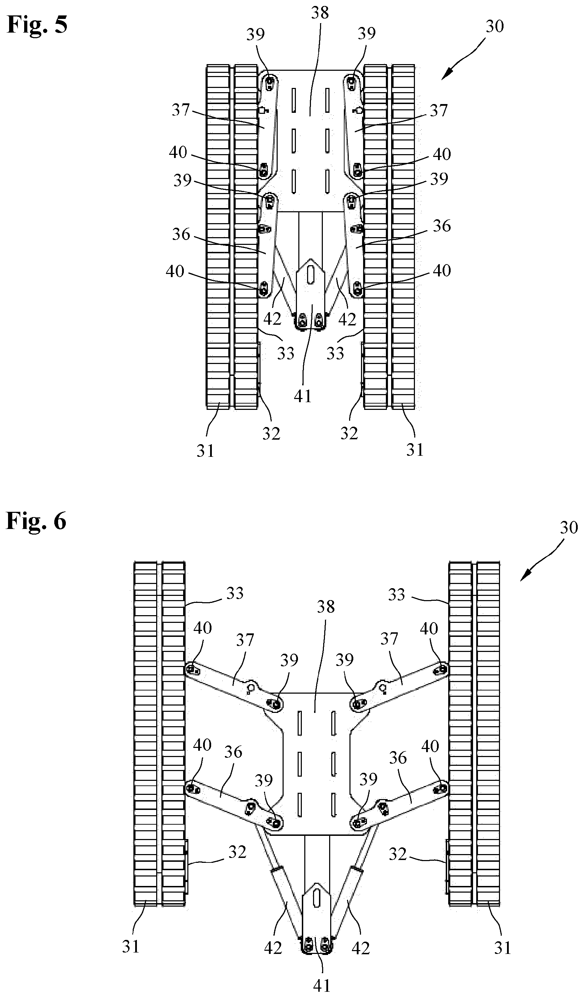

In den Figuren 5 und 6 ist ein spezieller Fahrantrieb 30 zum Verfahren der Reinigungsvorrichtung 1 zwischen den Reihen der zu reinigenden Photovoltaik- und Solarpaneele gezeigt. Auch dieser Fahrantrieb 30 ist als Kettenantrieb mit Fahrketten 31 auf zwei voneinander beabstandeten parallelen Fahrkettenträgern 33 ausgeführt. Die beiden Fahrketten 31 können durch hydraulische oder elektrische Antriebsmotoren 32 angetrieben werden. Bei diesem Fahrwerk 30 ist außerdem der Abstand zwischen den Fahrketten 31 über einen Stellantrieb veränderbar. Hierzu sind die auch in Figur 1 gezeigten Fahrkettenträger 33 bei dieser Ausführung über eine Parallelschwingenanordnung mit jeweils zwei zueinander parallelen vorderen und hinteren Schwingen 36 und 37 gelenkig mit einem zentralen Träger 38 verbunden. Jeweils ein Fahrkettenträger 35 ist über zwei zueinander parallele vordere und hintere horizontale Schwingen 36 bzw. 37 gelenkig mit dem zentralen Träger 38 verbunden. Die Schwingen 36 und 37 sind über ein inneres Gelenk 39 an dem zentralen Träger 38 und über ein äußeres Gelenk 40 an dem Fahrkettenträger 33 angelenkt. Über zwei an einem Ansatz 41 des Trägers 38 und an den beiden vorderen Schwingen 36 angelenkte Stellzylinder 42 können die Fahrkettenträger 33 mit den Fahrketten 31 zwischen einem in Figur 5 gezeigten zusammengefahrenen Zustand und einem in Figur 6 gezeigten auseinandergefahrenen Zustand verstellt werden. Über den durch die Stellzylinder 42 und die Schwingen 36 und 37 gebildeten Stellantrieb kann so der Abstand zwischen Fahrketten 31 verändert werden. Im zusammengefahrenen Zustand kann die Reinigungsvorrichtung 1 so auch in schmalen Gassen zwischen den Reihen der zu reinigenden Photovoltaik- und Solarpaneele verfahren werden. Im auseinandergefahrenen Zustand bietet das Fahrgestell eine stabile und kippsichere Auflage. Die Fahrketten 31 können so auch bei schmaleren Gassen unter die Tragkonstruktionen der zu reinigenden Photovoltaik- und Solarpaneele verschoben und zur Reinigung unter diesen bewegt werden.

### Bezugszeichenliste

- 1: Reinigungsvorrichtung
- 2: Reinigungsaggregat
- 3: Trag- und Positioniereinrichtung
- 4: Tragkonstruktion
- 5: Vertikalachse
- 6: Drehantrieb
- 7: Tragsäule
- 8: Auslegerarm
- 9: Oberes Anschlussteil
- 10: Erste Querachse
- 11: Erster Stellantrieb
- 12: Getriebe
- 13: Erster hydraulischer Stellmotor
- 14: Unteres Anschlussteil
- 15: Tragarm
- 16: Zweite Querachse
- 17: Zweiter Stellantrieb
- 18: Getriebe
- 19: Zweiter hydraulischer Stellmotor
- 20: Niveauausgleichszylinder
- 21: Druckspeicher
- 22: Zentralantrieb
- 23: Reinigungsbürste
- 24: Reinigungsbürste
- 25: Vertikalstütze
- 26: Querträger
- 27: Verstrebung
- 28: Reinigungsflüssigkeitsbehälter
- 29: Energieversorgungseinrichtung
- 30: Fahrantrieb
- 31: Fahrkette
- 32: Antriebsmotor
- 33: Fahrkettenträger
- 34: Verbrennungsmotor
- 35: Hydraulikpumpe
- 36: Vordere Schwinge
- 37: Hintere Schwinge
- 38: Zentraler Träger
- 39: Inneres Gelenk
- 40: Äußeres Gelenk
- 41: Ansatz
- 42: Stellzylinder

## Patentansprüche

1. Reinigungsvorrichtung (1) zur Reinigung der Oberfläche von Solaranlagen, Photovoltaikanlagen, Glasdächern, Fassaden oder anderer glatter Flächen, die ein Reinigungsaggregat (2), eine Trag- und Positioniereinrichtung (3) mit einem mittels eines ersten Stellantriebs (11) um eine horizontale erste Querachse (10) schwenkbaren Auslegerarm (8) und einem an dem Auslegerarm (8) schwenkbar angeordneten Tragarm (15) zur Positionierung des Reinigungsaggregats (2) und eine an der Trag- und Positioniereinrichtung (3) angeordnete Lastausgleichseinrichtung (20, 21) zur Einstellung und automatischen Regulierung des von dem Reinigungsaggregat (2) auf die zu reinigende Oberfläche wirkenden Anpressdrucks enthält, **dadurch gekennzeichnet, dass** der Tragarm (15) durch einen zweiten Stellantrieb (17) um eine zur ersten Querachse (10) parallele zweite Querachse (16) zwischen einer auf den Auslegerarm (8) zurückgeklappten Parkposition oberhalb des Auslegerarms (8) und einer ausgeklappten Reinigungsposition schwenkbar ist.

2. Reinigungsvorrichtung (1) nach Anspruch 1, **dadurch gekennzeichnet, dass** der zweite Stellantrieb (17) als Drehantrieb mit einem Getriebe (18) und einem Antriebsmotor (19) ausgebildet ist.

3. Reinigungsvorrichtung (1) nach Anspruch 1 oder 2, **dadurch gekennzeichnet, dass** der Auslegerarm (8) an einer mittels eines Drehantriebs (6) um eine Vertikalachse (5) drehbaren Tragsäule (7) um die horizontale erste Querachse (10) schwenkbar angeordnet ist.

4. Reinigungsvorrichtung (1) nach Anspruch 3, **dadurch gekennzeichnet, dass** die Trag- und Positioniereinrichtung (3) eine integrierte Energieversorgungseinrichtung (29) zur Versorgung des Drehantriebs (6), des ersten Stellantriebs (11) und des zweiten Stellantriebs (17) mit Antriebsenergie enthält.

5. Reinigungsvorrichtung (1) nach Anspruch 4, **dadurch gekennzeichnet, dass** die Energieversorgungseinrichtung (29) einen Verbrennungsmotor (33) und eine Hydraulikpumpe (34) zur Versorgung des Drehantriebs (6) und der Stellantriebe (11, 17) mit Druckfluid umfasst.

6. Reinigungsvorrichtung (1) nach einem der Ansprüche 1 bis 5, **dadurch gekennzeichnet, dass** die Trag- und Positioniereinrichtung (3) eine Tragkonstruktion (4) enthält, in der ein Reinigungsflüssigkeitsbehälter (5) untergebracht ist.

7. Reinigungsvorrichtung (1) nach Anspruch 6, **dadurch gekennzeichnet, dass** der Reinigungsflüssigkeitsbehälter (5) als Wassertank ausgebildet ist.

8. Reinigungsvorrichtung (1) nach einem der Ansprüche 1 bis 7, **dadurch gekennzeichnet, dass** die Trag- und Positioniereinrichtung (3) einen integrierten Fahrantrieb (30) enthält.

9. Reinigungsvorrichtung (1) nach Anspruch 8, **dadurch gekennzeichnet, dass** der Fahrantrieb (30) als Kettenantrieb mit Fahrketten (31) auf zwei zueinander parallelen Kettenträgern (33) ausgebildet ist.

10. Reinigungsvorrichtung (1) nach Anspruch 9, **dadurch gekennzeichnet, dass** der Abstand zwischen den Fahrketten (31) durch einen Stellantrieb (36, 37, 42) veränderbar ist.

11. Reinigungsvorrichtung (1) nach Anspruch 10, **dadurch gekennzeichnet, dass** der Stellantrieb (36, 37, 42) durch Stellzylinder (42) sowie vordere und hintere horizontale Schwingen (36, 37) gebildet wird.

12. Reinigungsvorrichtung (1) nach Anspruch 11, **dadurch gekennzeichnet, dass** die zueinander parallelen vorderen und hinteren horizontalen Schwingen (36, 37) über ein inneres Gelenk (39) an einem zentralen Träger (38) und ein äußeres Gelenk (40) an dem Fahrkettenträger (33) angelenkt sind.

13. Reinigungsvorrichtung (1) nach einem der Ansprüche 1 bis 12, **dadurch gekennzeichnet, dass** das Reinigungsaggregat (6) als Bürstenaggregat mit einem am vorderen freien Ende des Tragarms (15) angeordneten Zentralantrieb (22) und zwei gegenüber dem Zentralantrieb (22) zu beiden vorstehenden und durch den Zentralantrieb (22) gleichzeitig angetriebenen Reinigungsbürsten (23, 24) ausgeführt.

14. Reinigungsvorrichtung (2) nach einem der Ansprüche 1 bis 13, **dadurch gekennzeichnet, dass** die Lastausgleichseinrichtung (20, 21) einen zwischen der Tragsäule (24) und dem Auslegerarm (8) angeordneten Niveauausgleichszylinder (20) und einen dem Niveauausgleichszylinder (20) zugeordneten Druckspeicher (21) enthält.
